# EUROPEAN PATENT SPECIFICATION

(11) **EP 2 030 503 B1**
(45) Date of publication and mention of the grant of the patent: **06.04.2011**
(21) Application number: 08163251.5
(22) Date of filing: 29.08.2008
(51) Int. Cl.: A01G 31/02

(54) **Apparatus for hydroponic cultivation of plants**
Anlage für hydroponische Pflanzenzucht
Installation pour la culture hydroponique de plantes

(30) Priority: 30.08.2007 FI 20075598; 10.12.2007 FI 20075889; 27.03.2008 FI 20085248
(43) Date of publication of application: 04.03.2009
(73) Proprietor: Viherasema Oy, 02130 Espoo (FI)
(72) Inventor: Lindberg, Pasi, Ukonvaaja 1 C 3, Espoo (FI); Nurminen, Toni, 01450, Vantaa (FI); Tukiainen, Mikko, 45700, Kuusankoski (FI)
(74) Representative: Partio, Erja

(56) References cited:
- EP-A- 0 052 264
- US-A- 5 440 836
- US-A1- 2005 274 824
- ANONYM: "Hydroponic systems" HYDROPONIC GROWING SYSTEMS FROM ADVANCE GREENHOUSES, [Online] 23 April 2006 (2006-04-23), XP002504955 Retrieved from the Internet: URL:http://web.archive.org/web/20060423074 917/http://www.advancegreenhouses.com/hydr oponic_growing_systems_from.htm> [retrieved on 2008-11-20]
- TOCQUIN PIERRE ET AL: "A novel high efficiency, low maintenance, hydroponic system for synchronous growth and flowering of Arabidopsis thaliana" BMC PLANT BIOLOGY, BIOMED CENTRAL, LONDON, GB, vol. 3, no. 1, 30 January 2003 (2003-01-30), page 2, XP021015164 ISSN: 1471-2229

## Description

### TECHNICAL FIELD

The invention relates to hydroponic cultivation of plants. More specifically, the invention relates to a novel apparatus for carrying out hydroponic cultivation of plants.

### BACKGROUND OF THE INVENTION

Hydroponic cultivation is a cultivation technique in which plants are grown without soil. Instead of the soil, the plants are placed into a hydroponic cultivation system in such manner that the roots of the plants are able to contact a liquid nutrient solution. Hydroponic cultivation systems should include equipment for supporting the plants and delivering nutrient solution and water to the plants. In the following, the combination of water and nutrient solution will be referred to as "liquid".

In the known hydroponic cultivation systems, liquid is delivered to the plants in many different ways. In passive systems, liquid may be absorbed upwards from a vessel for example via thin capillaries, as disclosed for example in publication US2005241231. The plants may also be floated in the liquid, in which case they are secured to a floating support structure.

A problem with the above-mentioned hydroponic cultivation systems is that the liquid is delivered to the plants in a closed space or directly from a larger volume in which case the oxygen content of the liquid remains low. Low oxygen content slows down the growth of the plants or may cause their death.

In order to increase the oxygen content of the liquid, hydroponic cultivation systems in which the liquid is delivered to the plants as a spray have been developed. One such system is disclosed for example in publication US6807770. Spraying the roots of the plants may often be controlled by a timer. However, a problem in these kinds of systems is the complexity of the spraying system and the difficulty to make sure that the roots of all plants are evenly exposed to the liquid as they grow.

Furthermore, in order to support plants in hydroponic cultivation systems, the requirements of different types of plants should be acknowledged. One plant may have many different types of roots, and for example air roots take the oxygen they need directly from air. For example, hydroponic cultivation apparatuses of the prior art based on spraying systems often require that the roots be suspended freely in the air. This is problematic from the standpoint of trying to acknowledge the requirements relating to differentiation of the roots.

A hydroponic growing system from document US 2005/0274824 or Advance Greenhouses (http://www.advancegreenhouses.com/hydroponic_growing_ systems_from.htm) discloses a system (ECO GROWER® DRIP HYDROPONIC SYSTEM) which comprises a cover apparatus including a lid section on a liquid vessel. The plants are placed in 15,24 cm (6") net pots which are located in openings of the lid section. The openings, however, are round shaped and can therefore reliably accommodate only round pots with a specific diameter.

### OBJECTIVE OF THE INVENTION

The objective of the invention is to eliminate the above-mentioned problems of the prior art and to disclose a novel and simple apparatus for carrying out the liquid circulation, for oxidizing the liquid and for supporting the plants in a hydroponic cultivation system.

### SUMMARY OF THE INVENTION

The apparatus according to the invention is characterized by what has been presented in independent claim 1.

The apparatus according to the invention for hydroponic cultivation of plants comprises growing media and means for delivering liquid to the plants. According to the invention, the apparatus comprises a cover apparatus with a substantially planar cover section which can be placed horizontally above the bottom of a liquid vessel and, on the substantially planar surface of the cover section, a liquid reservoir, growth openings for growing the plants through the growth openings from the growing media, which are positioned in alignment with the growth openings in the horizontal direction and under the planar surface of the cover section in the vertical direction; and channels on the upper surface of the cover section, so that the liquid can be delivered to the growth openings through the channels, the growth openings are oval-shaped, comprising a tapering end and a round end, for placing flexible pots which differ from each other in size firmly into the growth openings.

In one embodiment of the invention, the cover section of the cover apparatus comprises a pressure cap which covers the channels and the liquid reservoir on the upper surface of the cover section in order to flow liquid through the channels and towards the growth openings with pressure. This type of pressurized liquid circulation permits the disposition of the apparatus on irregular or inclined surfaces, because the pressurized liquid flow on the cover section is not sensitive to tilting.

In one embodiment of the invention, the channels of the cover section of the cover apparatus have such dimensions and inclinations that an equal amount of liquid passes through each channel. In this manner, the growth conditions of each plant in the hydroponic culture can be adjusted to be the same.

In one embodiment of the invention, the channels of the cover section of the cover apparatus comprise an adjustable restriction for controlling the amount of liquid passing through the channel. In this manner, the liquid flow rates in individual channels can be controlled independently of the other channels.

In one embodiment of the invention, the channels on the cover section of the cover apparatus are so inclined that the liquid flows through the channels from the liquid reservoir towards the growth openings by the effect of gravity, so that the pressurized flow effected by means of the pressure cap is not necessary.

In one embodiment of the invention, the cover section of the cover apparatus comprises a drain hole for removing excess liquid from the cover section. The liquid can be removed through the drain hole into the liquid vessel positioned under the cover section of the cover apparatus. It is also possible to add liquid into the liquid vessel through the drain hole to replace possibly evaporated liquid without having to move the cover apparatus from its position with respect to the liquid vessel. In one embodiment of the invention, the cover section of the cover apparatus comprises a rim raised at the edges in order to hold excess liquid on the cover section. In this manner, if the liquid would flow on the cover section and away from the channels or the liquid reservoir, it will nevertheless not be able to flow over the cover section.

In one embodiment of the invention, the cover section of the cover apparatus comprises a skirt section depending from the edges of the planar surface of the cover section towards the bottom of the liquid vessel, which skirt section can be positioned into the liquid vessel in such manner that it settles inside the edges of the liquid vessel. In this case, it is not required that the cover section be supported onto the edge of the liquid vessel, but it may instead be supported onto the bottom, e.g. by means of a rack section. The advantage of the embodiment of this type is that the liquid possibly flown onto the cover section is able to flow from the edges of the cover section and along the outer surface of the skirt back into the liquid vessel, so that a separate drain hole and rim are not required.

In one embodiment of the invention, the cover apparatus comprises a rack section under the planar surface of the cover section in order to secure the associated equipment to the cover apparatus. The rack section settles substantially inside the liquid vessel when the cover apparatus is being placed in its position. The liquid vessel refers to any container which holds liquid and is able to accommodate the cover apparatus according to the invention. The rack section may operate as a support for the cover apparatus and/or join other such elements and/or equipment to the cover apparatus which may be needed for using the cover apparatus.

In one embodiment of the invention, the cover apparatus comprises a tube under the planar surface of the cover section, one end of the tube being directed into the liquid reservoir in order to deliver liquid from the liquid vessel by means of a liquid pump and through the tube into the liquid reservoir of the cover section.

In one embodiment of the invention, the growing media are made of porous material. The liquid which contacts the growing medium through the porous material spreads evenly over the entire porous medium, thereby wetting evenly the entire rootstock. Supporting the plants onto the porous growing media permits cultivation of many different types of plants.

In one embodiment of the invention, the apparatus comprises root tubes which can be secured to the cover section of the cover apparatus in alignment with the growth openings and under the planar surface of the cover section, and the growing media can be positioned inside the root tubes. The root tubes protect the roots of the plant and prevent liquid from being evaporated from the growing medium, so that humidity inside the root tube can be raised to a high level. Further, the root tubes protect the liquid pump, optionally positioned on the bottom of the liquid vessel, from choking by preventing the roots from drifting to the liquid pump. Also, the root tubes keep the roots of different plants separated from each other so that the roots of different plants will not become entangled with each other. This is useful e.g. when an individual plant is lifted away from the liquid vessel e.g. when being replaced with another plant.

In one embodiment of the invention, in the lower part of the root tubes there are openings for circulating liquid through the root tubes and/or openings for passing an air hose through the root tubes. The air released from the air hose increases the oxygen content and carbon dioxide content of the air space inside the root tube, thereby enhancing the oxygen and carbon dioxide intake of the roots.

In one embodiment of the invention, the apparatus comprises fitting elements which can be secured to the cover section of the cover apparatus in alignment with the growth openings and under the planar surface of the cover section for securing root tubes of different sizes to the cover section. In particular, the fitting elements permit securing herbs and potted lettuces sold in grocery shops under the growth openings as such.

In one embodiment of the invention, an air space can be left between the growing media and the surface of the liquid in the liquid vessel when the cover apparatus is placed in its position with respect to the liquid vessel for growing the roots out from the growing media into air. The volume of the air space left between the rootstock of the plants and the liquid surface of the liquid vessel can be controlled by varying the level of the liquid surface. This provides the possibility of optimizing the conditions for example for the air roots of the plants; thanks to the air space, the air roots do not grow directly into the liquid but to the humid and carbon dioxide containing air space.

In addition to having a simple structure, the liquid circulation in the apparatus according to the invention has been carried out in such manner that the liquid is efficiently oxidized. Oxidation can be enhanced e.g. by the air hose directed through the root tubes and by the channels on the cover section. In this manner, the liquid is efficiently exposed to the air.

The embodiments of the invention presented above can be combined freely with each other. Many of the embodiments may be combined in order to form a new embodiment. The device to which the invention relates may include one or more of the above-mentioned embodiments of the invention.

### DETAILED DESCRIPTION OF THE INVENTION

In the following section, the invention will be described by means of some of its embodiments with reference to the accompanying drawings in which
Fig. 1 illustrates one cover apparatus according to the invention and one root tube according to the invention three-dimensionally and seen obliquely from the top of the cover section,
Fig. 2 illustrates schematically one cover apparatus according to the invention as seen from the side in a situation where the apparatus has been positioned in a liquid vessel,
Fig. 3a illustrates one cover apparatus according to the invention with a pressure cap three-dimensionally and seen obliquely from the top of the cover section,
Fig. 3b illustrates a cross-section of one cover apparatus according to the invention with a pressure cap illustrated in Fig. 3a,
Fig. 4 illustrates schematically one cover apparatus according to the invention with a pressure cap as seen from the side in a situation where the apparatus has been positioned in a liquid vessel,
Fig. 5 illustrates one cover section of the cover apparatus according to the invention as seen from the top and

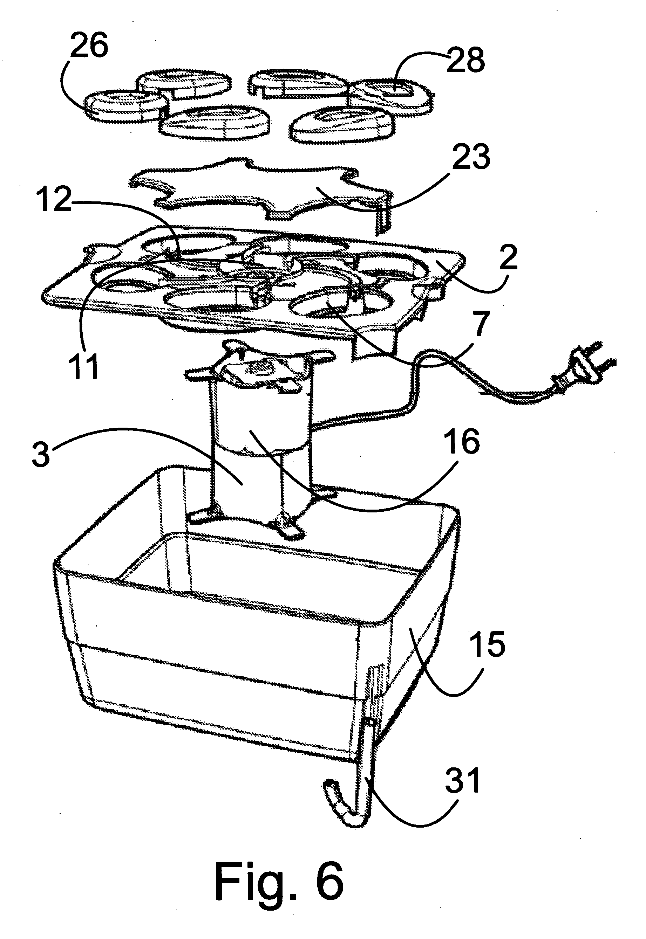

Fig. 6 illustrates a three-dimensional schematic general view of one cover apparatus and liquid vessel according to the invention.

For simplifying purposes, the repeating elements of the invention are referred to by the same numerals in the following examples.

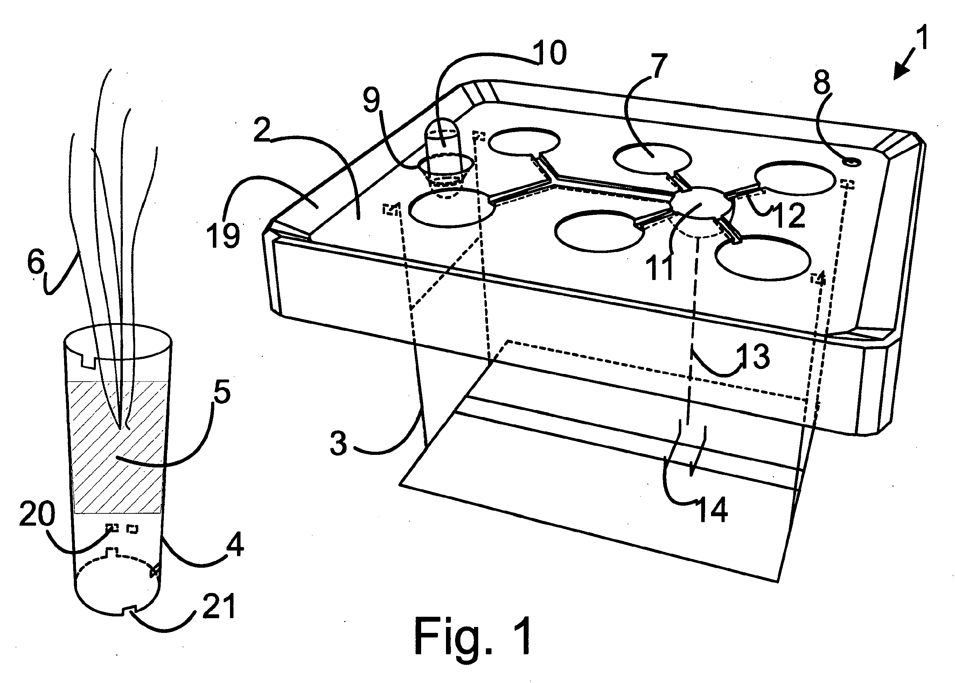

The cover apparatus 1 of Fig. 1 comprises a cover section 2 and a rack section 3 and root tubes 4 which can be secured under the cover section 2. The root tubes 4 may be secured to the cover section 2 of the cover apparatus 1 from below. Inside the root tubes 4, there are porous growing media 5 for planting the seed and supporting the plant 6 by the roots. Another function of the root tubes 4 is to keep most of the root mass off from direct liquid contact so that the greatest possible aeration is provided for the roots. Also e.g. inorganic material (e.g. LECA) may be added to the root tube 4 in order to improve the support for the plant 6. The root tube 4 does not support the cover apparatus 1, so it does not have to extend to the bottom of the liquid vessel. The root tube 4 and the entire plant 6 including roots may be removed through a growth opening 7 as one unit and replaced by another plant 6, which increases the versatility of the apparatus 1.

The cover section 2 of the apparatus includes the growth openings 7 provided with securing elements for the root tubes 4 and a measurement opening 8 for measuring the level of the liquid surface in the liquid vessel. The level of the liquid surface in the liquid vessel 15 can be observed for example by means of a float meter. The float meter may be for example a buoyant float on the liquid surface. The float is positioned inside a clear tube, so that the upper end of the tube includes a hole which permits free movement of the float inside the tube, the air being able to be released through the hole. The lower part of the tube is in this case open so that the liquid is able to flow into the tube. In addition, the meter for observing the liquid surface level may be secured to the cover section 2 of the apparatus according to the invention in such manner that when the cover section 2 is lifted off, the meter will not drop into the liquid vessel 15. The liquid surface level may also be measured e.g. by means of an opening made on the bottom of the liquid vessel 15, in which case e.g. a transparent hose 31 is secured to the opening and the liquid surface level may be observed through the hose. In this case, a groove for the transparent hose 31 may be made on the bottom of the liquid vessel 15 for directing the transparent hose 31 through the groove to the opening on the bottom of the liquid vessel 15. Furthermore, marks may be provided to the liquid vessel 15 for indicating e.g. the highest admissible level of the liquid surface.

The cover section 2 further includes a drain hole 9, a plug 10 that can be inserted into the drain hole 9, a liquid reservoir 11, channels 12 which connect the liquid reservoir 11 with each growth opening 7 and, secured to the liquid reservoir 11, a tube 13 which can be secured to a liquid pump at the other end. According to the example of Fig. 1, the rack section 3 of the cover apparatus 1 includes a seat 14 for the liquid pump. Furthermore, the root tubes include openings 20 for the liquid circulation and openings 21 for the air hose. The cover section 2 of the cover apparatus 1 includes a rim 19 for holding excess liquid on the cover.

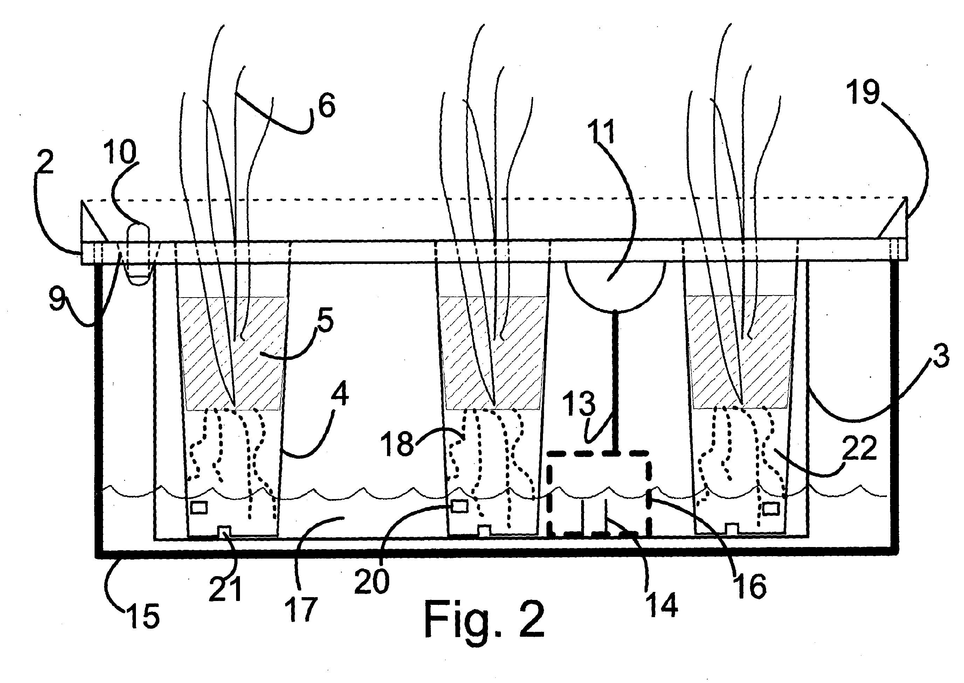

In Fig. 2, the cover apparatus 1 is placed above the liquid vessel 15 in such manner that the liquid pump 16 is positioned on the bottom of the liquid vessel 15, secured to the rack section 3 and to the seat 14 provided for the liquid pump 16. The rack section 3 is not supported onto the bottom of the liquid vessel 15, the cover section 2 thereby being pressed against the edges of the liquid vessel 15. This provides the possibility of sealing the cover section 2 to the edge of the liquid vessel 15 for example by means of a seal. When the cover apparatus 1 is placed in its position above the liquid vessel 15, the liquid pump 16 is able to contact the liquid 17. The liquid pump 16 may further comprise ultraviolet (UV) LEDs which direct ultraviolet radiation into the liquid 17 or the liquid circulation to aid in keeping the liquid 17 clean e.g. by killing bacteria in the liquid 17 and reducing the formation of algae in the hydroponic cultivation apparatus.

Fig. 2 shows further the roots 18 which grow outside the growing medium 5, the longest ones being able to extend below the liquid surface and to the bottom of the liquid vessel. Between the growing medium 5 and the surface of the liquid 17 there is an air space 22 in which some of the roots of the plant 6 have enough space to grow without the roots contacting the liquid 17.

The rack section 3, cover section 2, root tubes 4, growing media 5 inside the root tubes 4, plants 6, and optionally the liquid pump 16 and the air hose may be optionally lifted away from the liquid vessel 15 as one unit, e.g. when the liquid in the liquid vessel 15 is being changed. Therefore, the cover apparatus 1 may convert a normal liquid vessel 15 into a hydroponic cultivation apparatus.

When the liquid pump 16 is operating, it pumps liquid 17 upwards through a tube 13 secured to the liquid pump 16 into the liquid reservoir 11 of the cover section 2. In the liquid reservoir 11, as the liquid surface rises to a sufficient level, the liquid flows through optionally inclined channels 12 by the effect of gravity and/or pressure provided by the liquid pump 16 to the growth openings 7, from the edge of which it flows to the porous growing medium 5 secured to the root tube 4 and supporting the roots of the plant 6. In this manner, the liquid wets the rootstock inside the growing medium 5. To prevent the liquid from evaporating through the root tubes 4 and the growing media 5, there may be a protective section 26 positioned onto the root tubes 4, including an opening 28 through which the plant 6 is able to grow and through which opening 28 liquid can be delivered into the porous growing medium 5. Furthermore, the protective section 26 prevents direct light from penetrating into the growing medium 5. In order to control the filling up of the liquid reservoir 11, there is a hole in the reservoir to which hole the tube 13 is connected. The liquid is able to flow back into the liquid vessel 15 through the tube 13 when the liquid circulation is not operating. The liquid circulation can be controlled for example by means of a timer circuit engaged to control the operation of the liquid pump 16 and an optional air pump. In addition, the timer circuit may be engaged to control lighting of the plants 6 and other electrical devices optionally associated with hydroponic cultivation.

The plants 6 grow in the growing media 5 secured to the root tubes 4 and through the growth openings 7 and the protective sections 26 optionally placed onto the root tubes 4. As the plants grow, their long roots 18 may extend below the liquid surface of the liquid vessel 15 so that they are able to absorb liquid 17 from the vessel by themselves. For this purpose, the root tubes 4 have openings 20 through which the liquid 17 is able to circulate in the root tubes 4. The openings 20 may be positioned so that they are directed away from the liquid pump, so that the roots possibly growing out from the openings 20 are not easily drifted to the liquid pump 16 to choke it.

The shorter roots and the air roots of the plants 6 grow in the air space 22 between the growing medium 5 and the surface of the liquid 17. The root tubes 4 also have openings 21 for introducing an air hose in order to enhance oxidation of the liquid 17 inside the root tubes 4. The air hose positioned on the bottom of the liquid container 15 aerates the liquid 17 and circulates new air into the liquid vessel 15 from the surrounding atmosphere using an air pump which is external to the apparatus. Air is delivered from the air hose into the liquid 17 in the liquid vessel 15 through pores or small holes in the air hose. The air hose can be secured to the rack section 3 optionally secured to the apparatus.

The cover section 2 of the cover apparatus 1 comprises a rim 19 for holding excess liquid on the cover. In a situation where the liquid may flow onto the cover section 2 and away from the channels 12 or the liquid vessel 11, it will nevertheless be not able to flow over the cover section 2. Further, the cover section 2 of the cover apparatus 1 optionally comprises a drain hole 9 for removing from the cover any liquid that has flown onto the cover and directing it back into the liquid vessel 15 under the cover section 2 of the cover apparatus 1. A plug 10 may be used in the drain hole 9 for preventing direct light from penetrating inside the liquid vessel 15, the plug having smaller openings at the edges so that the liquid flown onto the cover section 2 is able to flow back into the liquid vessel 15. When the plug 10 is not positioned in the drain hole 9, it can be used for adding more liquid into the liquid vessel 15.

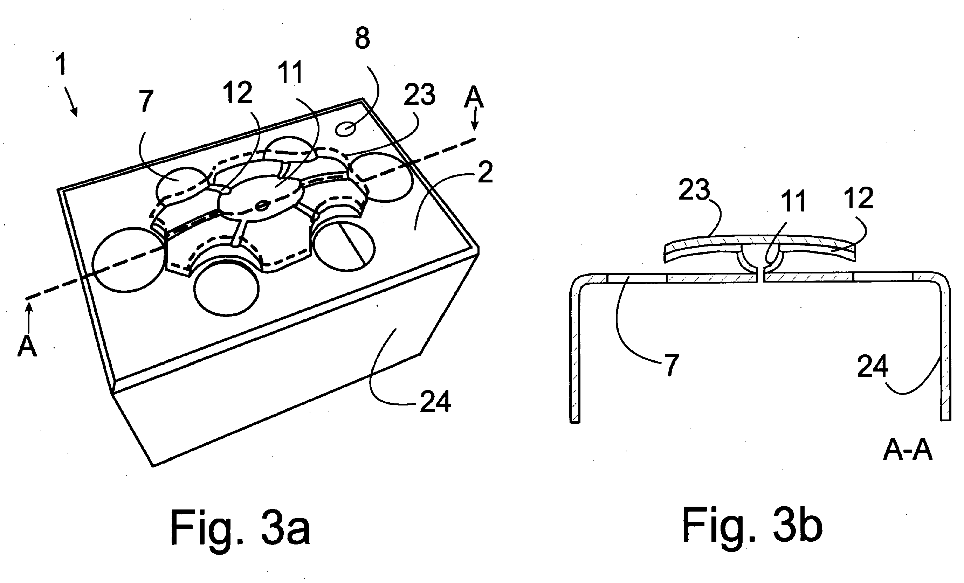

In one cover apparatus 1 presented in Fig. 3a, the liquid reservoir 11 is positioned above the cover section 2. Furthermore, the liquid reservoir 11 and the channels 12 are covered by a pressure cap 23, the outlines of which are indicated in Fig. 3a in dashed line. The pressure cap 23 rests over the channels 12 and the liquid reservoir 11 in a liquid tight manner as presented in Fig. 3b, so that liquid 17 can be pumped with pressure from the liquid vessel 15 and through the liquid reservoir 11 and the channels 12 to the growth openings 7. Thanks to this kind of pressurized liquid circulation, the passage of the liquid to the growth openings 7 is not sensitive to tilting of the cover apparatus 1, and the apparatus can therefore be positioned on an irregular or even inclined surface. Fig. 3b shows a cross section of the cover apparatus 1 according to Fig. 3a, illustrating e.g. the positioning of the liquid reservoir 11 above the cover section 2.

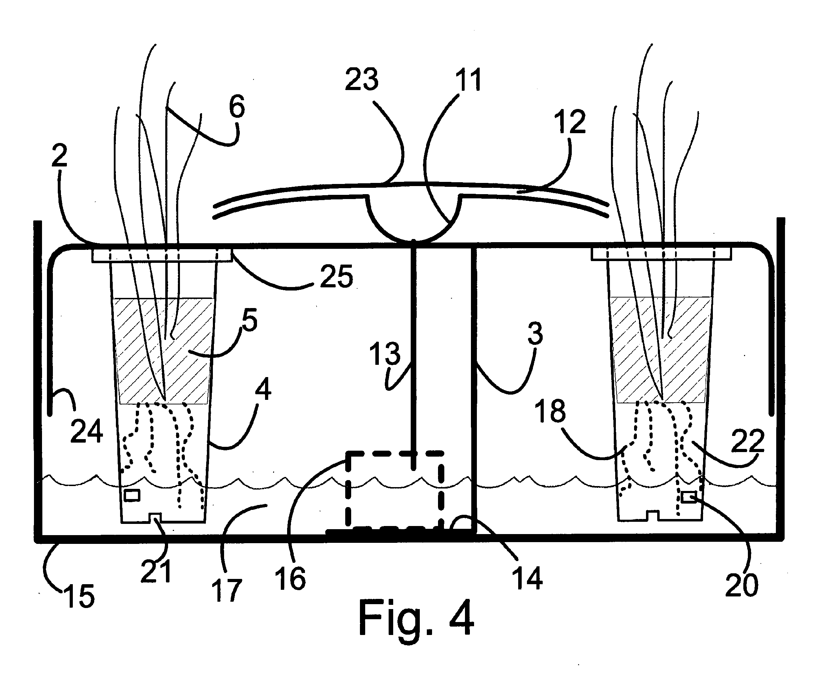

Fig. 4 illustrates the positioning of one cover apparatus 1 according to the invention and illustrated in Fig. 3a above the liquid vessel 15. The cover apparatus 1 settles in the liquid vessel 15 in such manner that the skirt section 24 of the apparatus is provided inside the liquid vessel 15. In this embodiment, the cover apparatus 1 is supported onto the bottom of the liquid vessel 15 by means of the rack section 3. The rack section 3 presented in Fig. 4 includes a seat 14 for the liquid pump 16, which seat forms a support surface for the cover apparatus 1 on the bottom of the liquid vessel 15. Furthermore, in this embodiment of the invention, there is no need for a separate drain hole 9 or rim 19 in the cover apparatus 1, but instead, the excess liquid, possibly flown onto the cover section 2, is able to flow back into the liquid vessel 15 along the outer surface of the skirt section 24. Between the root tubes 4 and the growth openings 7 of the cover section 2, there is a fitting element 25, which enables the use of root tubes 4 of different sizes and different shapes in the apparatus. In Fig. 3a, 3b and 4, different parts of the cover apparatus 1 are indexed as in Fig. 1 and 2.

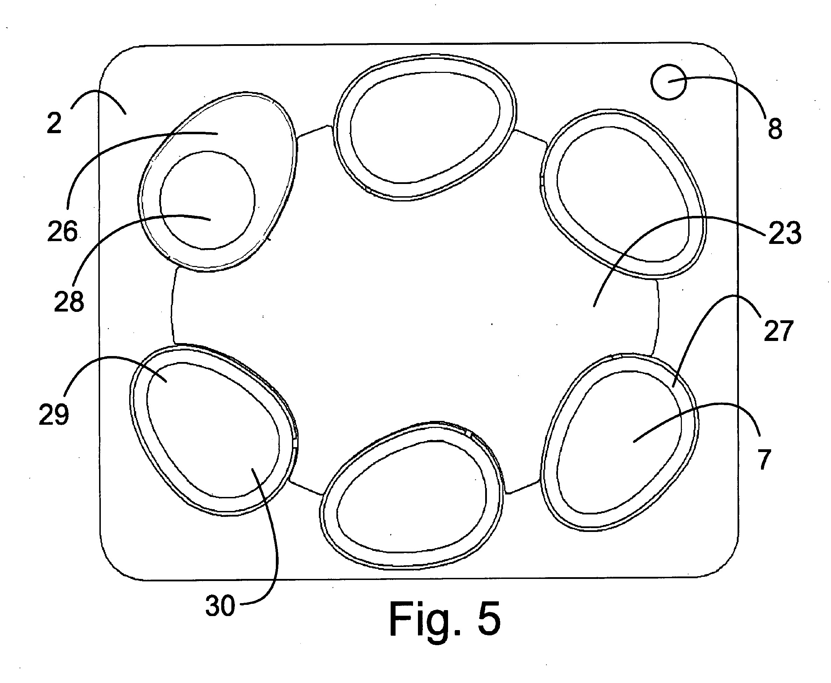

Fig. 5 illustrates one cover section 2 of the cover apparatus 1 according to the invention. In Fig. 5, the pressure cap 23 covers some of the elements above the cover level, such as the channels 12 and the liquid reservoir 11. The growth openings 7 shown in the figure are oval-shaped, and a separate protective section 26 can be placed onto the growth openings, the section being so shaped that it can be placed over the rim 27 of the growth opening e.g. when growing from seed. In Fig. 5, there is a round opening 28 in the center of the protective section 26 through which the plant 6 is able to grow. The protective section 26 serves as a support for the plants 6 and also protects the growing medium 5, optionally in a pot inside the root tube 4, from direct light. Direct light to the growing medium 5 may increase the growth of algae and, by using the protective section 26, the algal growth can be minimized. Also, the protective section 26 protects the liquid 17 and the liquid circulation under the cover section 2 from direct light. The protective section 26 is not used when such pots are inserted into the growth openings 7 in which there already is a plant 6 preventing the positioning of the protective section 26 in its place.

The oval shape of the growth opening 7 illustrated in Fig. 5 may, in itself, operate as the fitting means for the pots placed inside the root tube 4 and under the growth opening 7. This shape permits the use of pots of varying diameters in the same growth opening 7. When a pot is used inside the root tubes 4, it is secured to the growth openings 7, and the growing medium 5 remains inside the pot. The root tube 4 is secured under the growth opening 7 e.g. by means of the fitting element 25.

The oval-shaped growth opening 7 according to Fig. 5 has a tapering end 29 and a round end 30. When a pot made from a flexible material (e.g. flexible plastic) is placed in this kind of growth opening 7, the mouth section of the pot adapts to the shape of the growth opening 7. The pot settles into the growth opening 7 in such manner that the flexible mouth section of the pot tends to recover the round shape, whereby the pot tends to move, under the growth opening 7, towards the round end 30 of the growth opening 7. Therefore, flexible pots of varying diameters can be firmly secured in the same growth opening 7 by means of the oval semi-circular shape of the growth opening 7 illustrated in Fig. 5.

The invention is not limited merely to the examples referred to above; instead, many variations are possible within the scope of the claims.

## Claims

1. An apparatus for hydroponic cultivation of plants, comprising growing media (5) and means for delivering liquid to the plants (6), a cover apparatus (1) including a substantially planar cover section (2) which can be placed horizontally above the bottom of a liquid vessel (15) and, on the substantially planar surface of the cover section (2), a liquid reservoir (11), growth openings (7) for growing the plants (6) through the growth openings (7) from the growing media (5) which are positioned in the horizontal direction in alignment with the growth openings (7) and in the vertical direction under the planar surface of the cover section (2); and, on the upper surface of the cover section (2), channels (12), so that the liquid can be delivered to the growth openings (7) through the channels (12), **characterized in that** the growth openings (7) are oval-shaped, comprising a tapering end (29) and a round end (30) so that flexible pots of varying sizes can be placed firmly into the growth openings (7).

2. The apparatus according to claim 1, **characterized in that** the cover section (2) of the cover apparatus (1) comprises a pressure cap (23) which covers the channels (12) and the liquid reservoir (11) on the upper surface of the cover section (2) in order to flow the liquid through the channels (12) with pressure.

3. The apparatus according to any one of claims 1 to 2, **characterized in that** the channels (12) of the cover section (2) of the cover apparatus (1) are so dimensioned and inclined that an equal amount of liquid flows through each channel (12).

4. The apparatus according to any one of claims 1 to 3, **characterized in that** the channels (12) of the cover section (2) of the cover apparatus (1) comprise an adjustable restriction for controlling the amount of liquid flowing through the channel.

5. The apparatus according to any one of claims 1 to 4, **characterized in that** the channels (12) on the cover section (2) of the cover apparatus (1) are so inclined that the liquid flows from the liquid reservoir (11) through the channels (12) and towards the growth openings (7) by the effect of gravity.

6. The apparatus according to any one of claims 1 to 5, **characterized in that** the cover section (2) of the cover apparatus (1) comprises a drain hole (9) for removing excess liquid from the cover section (2).

7. The apparatus according to any one of claims 1 to 6, **characterized in that** the cover section (2) of the cover apparatus (1) comprises a rim (19) raised at the edges for holding excess liquid on the cover section (2).

8. The apparatus according to any one of claims 1 to 7, **characterized in that** the cover section (2) of the cover apparatus (1) comprises a skirt section (24) depending from the edges of the planar surface of the cover section (2) towards the bottom of the liquid vessel (15), which skirt section (24) can be placed into the liquid vessel (15) in such manner that the skirt section (24) settles inside the edges of the liquid vessel (15).

9. The apparatus according to any one of claims 1 to 8, **characterized in that** the cover apparatus (1) comprises a rack section (3) under the planar surface of the cover section (2) in order to secure to the cover apparatus (1) devices that are to be associated with the cover apparatus (1).

10. The apparatus according to any one of claims 1 to 9, **characterized in that** the cover apparatus (1) comprises, under the planar surface of the cover section (2), a tube (13), one end of the tube (13) being directed to the liquid reservoir (11) for delivering liquid from the liquid vessel (15) into the liquid reservoir (11) of the cover section (2) through the tube (13) by means of a liquid pump (16).

11. The apparatus according to any one of claims 1 to 10, **characterized in that** the growing media (5) are made of porous material.

12. The apparatus according to any one of claims 1 to 11, **characterized in that** the apparatus comprises root tubes (4) which can be secured to the cover section (2) of the cover apparatus (1), in alignment with the growth openings (7) and under the planar surface of the cover section (2), inside which root tubes the growing media (5) can be positioned.

13. The apparatus according to claim 12, **characterized in that** there are openings (20) in the lower part of the root tubes (4) for circulating the liquid through the root tubes (4) and/or openings (21) for directing an air hose through the root tubes (4).

14. The apparatus according to any one of claims 1 to 13, **characterized in that** the apparatus comprises fitting elements (25) which can be secured to the cover section (2) of the cover apparatus (1), in alignment with the growth openings (7) and under the planar surface of the cover section (2), for securing root tubes (4) of varying sizes to the cover section (2).

15. The apparatus according to any one of claims 1 to 14, **characterized in that** when the cover apparatus (1) is positioned in its place with respect to the liquid vessel (15), an air space (22) can be provided between the growing media (5) and the surface of the liquid (17) in the liquid vessel (15) for growing the roots out from the growing media (5) into air.

## Patentansprüche

1. Vorrichtung zur hydroponischen Kultivierung von Pflanzen umfassend Wachstums-Medien (5) und Mittel zum Zuführen von Flüssigkeit zu den Pflanzen (6), eine Abdeckungs-Vorrichtung (1), die einen im Wesentlichen ebenen Abdeckungs-Bereich (2) umfasst, der horizontal über dem Boden eines Flüssigkeits-Behälters (15) angeordnet werden kann und, an der im Wesentlichen ebenen Fläche des Abdeckungs-Bereichs (2) einen Flüssigkeits-Vorratsbehälter (11), Wachstums-Öffnungen (7) zum Wachsen der Pflanzen (6) durch die Wachstums-Öffnungen (7) von den Wachstums-Medien (5), die in der horizontalen Richtung in Ausrichtung mit den Wachstums-Öffnungen (7) und in der vertikalen Richtung unter der ebenen Fläche des Abdeckungs-Bereichs (2) positioniert sind; und an der oberen Fläche des Abdeckungs-Bereichs (2) Kanäle (12), so dass die Flüssigkeit zu den Wachstums-Öffnungen (7) durch die Kanäle (12) zugeführt werden kann, **dadurch gekennzeichnet, dass** die Wachstums-Öffnungen (7) ovalförmig sind, ein konisches Ende (29) und ein rundes Ende (30) umfassen, so dass flexible Gefäße von verschiedenen Größen fest in den Wachstums-Öffnungen (7) angeordnet werden können.

2. Vorrichtung gemäß Anspruch 1, **dadurch gekennzeichnet, dass** der Abdeckungs-Bereich (2) von der Abdeckungs-Vorrichtung (1) eine Druck-Kappe (23) umfasst, die die Kanäle (12) und den Flüssigkeits-Vorratsbehälter (11) an der oberen Fläche des Abdeckungs-Bereichs (2) abdeckt, um die Flüssigkeit unter Druck durch die Kanäle (12) fließen zu lassen.

3. Vorrichtung gemäß einem der Ansprüche 1 oder 2, **dadurch gekennzeichnet, dass** die Kanäle (12) des Abdeckungs-Bereichs (2) von der Abdeckungs-Vorrichtung (1) derart dimensioniert und geneigt sind, dass eine gleiche Flüssigkeitsmenge durch jeden Kanal (12) fließt.

4. Vorrichtung gemäß einem der Ansprüche 1 bis 3, **dadurch gekennzeichnet, dass** die Kanäle (12) des Abdeckungs-Bereichs (2) von der Abdeckungs-Vorrichtung (1) eine anpassbare Drosselung zur Steuerung der Flüssigkeitsmenge, die durch den Kanal fließt, umfasst.

5. Vorrichtung gemäß einem der Ansprüche 1 bis 4, **dadurch gekennzeichnet, dass** die Kanäle (12) an dem Abdeckungs-Bereich (2) von der Abdeckungs-Vorrichtung (1) derart geneigt sind, dass die Flüssigkeit über den Schwerkraft-Effekt von dem Flüssigkeits-Vorratsbehälter (11) durch die Kanäle (12) und zu den Wachstums-Öffnungen (7) fließt.

6. Vorrichtung gemäß einem der Ansprüche 1 bis 5, **dadurch gekennzeichnet, dass** der Abdeckungs-Bereich (2) von der Abdeckungs-Vorrichtung (1) eine Abfluss-Öffnung (9) zum Entfernen von überschüssiger Flüssigkeit von dem Abdeckungs-Bereich (2) umfasst.

7. Vorrichtung nach einem der Ansprüche 1 bis 6, **dadurch gekennzeichnet, dass** der Abdeckungs-Bereich (2) von der Abdeckungs-Vorrichtung (1) einen Rand (19) umfasst, der an den Kanten erhöht ist, um überschüssige Flüssigkeit auf dem Abdeckungs-Bereich (2) zu halten.

8. Vorrichtung gemäß einem der Ansprüche 1 bis 7, **dadurch gekennzeichnet, dass** der Abdeckungs-Bereich (2) von der Abdeckungs-Vorrichtung (1) einen Randbereich (24) umfasst, der von den Kanten der ebenen Fläche des Abdeckungsbereichs (2) zu dem Boden des Flüssigkeits-Behälters (15) abhängt, wobei der Randbereich (24) derart in den Flüssigkeits-Behälter (15) angeordnet werden kann, dass der Randbereich (24) sich innerhalb der Kanten des Flüssigkeits-Behälters (15) ansiedelt.

9. Vorrichtung gemäß einem der Ansprüche 1 bis 8, **dadurch gekennzeichnet, dass** die Abdeckungs-Vorrichtung (1) einen Gestell-Bereich (3) unter der ebenen Fläche des Abdeckungs-Bereichs (2) umfasst, um Vorrichtungen an den Abdeckungs-Vorrichtungen (1) zu befestigen, die mit der Abdeckungs-Vorrichtung (1) verbunden werden sollen.

10. Vorrichtung gemäß einem der Ansprüche 1 bis 9, **dadurch gekennzeichnet, dass** die Abdeckungs-Vorrichtung (1) unter der ebenen Fläche des Abdeckungs-Bereichs (2) ein Rohr (13) umfasst, wobei ein Ende des Rohrs (13) zu dem Flüssigkeits-Vorratsbehälter (11) ausgerichtet ist, um Flüssigkeit von dem Flüssigkeits-Behälter (15) in den Flüssigkeits-Vorratsbehälter (11) des Abdeckungs-Bereichs (2) durch das Rohr (13) mittels einer Flüssigkeits-Pumpe (16) zuzuführen.

11. Vorrichtung gemäß einem der Ansprüche 1 bis 10, **dadurch gekennzeichnet, dass** die Wachstums-Medien (5) aus einem porösen Material hergestellt sind.

12. Vorrichtung gemäß einem der Ansprüche 1 bis 11, **dadurch gekennzeichnet, dass** die Vorrichtung Wurzel-Rohre (4) umfasst, die an dem Abdeckungs-Bereich (2) von der Abdeckungs-Vorrichtung (1) befestigt werden können, in Ausrichtung mit den Wachstums-Öffnungen (7) und unter der ebenen Fläche des Abdeckungs-Bereichs (2), wobei die Wachstums-Medien (5) innerhalb der Wurzel-Rohre positioniert werden können.

13. Vorrichtung gemäß Anspruch 12, **dadurch gekennzeichnet, dass** in dem unteren Bereich von den Wurzel-Rohren (4) Öffnungen vorhanden sind, um die Flüssigkeit durch die Wurzel-Rohre (4) zirkulieren zu lassen und/oder Öffnungen (21) vorhanden sind, um einen Luftschlauch durch die Wurzel-Rohre (4) zu leiten.

14. Vorrichtung gemäß einem der Ansprüche 1 bis 13, **dadurch gekennzeichnet, dass** die Vorrichtung Befestigungs-Elemente (25) umfasst, die an dem Abdeckungs-Bereich (2) von der Abdeckungs-Vorrichtung (1) befestigt werden können, in Ausrichtung mit den Wachstums-Öffnungen (7) und unter der ebenen Fläche des Abdeckungs-Bereichs (2), um Wurzel-Rohre (4) von verschiedenen Größen an dem Abdeckungs-Bereich (2) zu befestigen.

15. Vorrichtung gemäß einem der Ansprüche 1 bis 14, **dadurch gekennzeichnet, dass** wenn die Abdeckungs-Vorrichtung (1) an ihrem Platz bezüglich des Flüssigkeits-Behälters (15) positioniert ist, ein Luft-Raum (22) zwischen den Wachstums-Medien (5) und der Oberfläche der Flüssigkeit (17) in dem Flüssigkeits-Behälter (15) vorgesehen sein kann, um die Wurzeln von den Wachstums-Medien (5) heraus in die Luft wachsen zu lassen.

## Revendications

1. Appareil pour la culture hydroponique de plantes, comprenant un média de croissance (5) et des moyens pour fournir un liquide aux plantes (6), un appareil de couverture (1) incluant une section de couverture (2) sensiblement plane qui peut être placée horizontalement au-dessus du fond d'un récipient à liquide (15) et, sur la surface sensiblement plane de la section de couverture (2), un réservoir à liquide (11), des ouvertures de croissance (7) pour la croissance des plantes (6) à travers les ouvertures de croissance (7) depuis le média de croissance (5), qui sont positionnées dans la direction horizontale en alignement avec les ouvertures de croissance (7) et dans la direction verticale au-dessous de la surface plane de la section de couverture (2) ; et, sur la surface supérieure de la section de couverture (2), des canaux (12) tels que le liquide peut être fourni aux ouvertures de croissance (7) via les canaux (12),
**caractérisé en ce que** les ouvertures de croissance (7) ont une forme ovale, comprenant une extrémité en rétrécissement (29) et une extrémité arrondie (30), de sorte que l'on peut placer fermement dans les ouvertures de croissance (7) des pots flexibles de diverses tailles.

2. Appareil selon la revendication 1, **caractérisé en ce que** la section de couverture (2) de l'appareil de couverture (1) comprend un capuchon à pression (23) qui couvre les canaux (12) et le réservoir à liquide (11) sur la surface supérieure de la section de couverture (2) afin d'amener le liquide à s'écouler sous pression via les canaux (12).

3. Appareil selon l'une quelconque des revendications 1 et 2, **caractérisé en ce que** les canaux (12) de la section de couverture (2) de l'appareil de couverture (1) présentent des dimensions telles et une inclinaison telle qu'une quantité égale de liquide s'écoule à travers chaque canal (12).

4. Appareil selon l'une quelconque des revendications 1 à 3, **caractérisé en ce que** les canaux (12) de la section de couverture (2) de l'appareil de couverture (1) comprennent une restriction réglable pour commander la quantité de liquide s'écoulant à travers le canal.

5. Appareil selon l'une quelconque des revendications 1 à 4, **caractérisé en ce que** les canaux (12) sur la section de couverture (2) de l'appareil de couverture (1) ont une inclinaison telle que le liquide s'écoule depuis le réservoir liquide (11) via les canaux (12) et vers les ouvertures de croissance (7) sous l'effet de la gravité.

6. Appareil selon l'une quelconque des revendications 1 à 5, **caractérisé en ce que** la section de couverture (2) de l'appareil de couverture (1) comprend un trou de drainage (9) pour supprimer un excès de liquide hors de la section de couverture (2).

7. Appareil selon l'une quelconque des revendications 1 à 6, **caractérisé en ce que** la section de couverture (2) de l'appareil de couverture (1) comprend un rebord (19) dressé au niveau des bordures pour retenir l'excès de liquide sur la section de couverture (2).

8. Appareil selon l'une quelconque des revendications 1 à 7, **caractérisé en ce que** la section de couverture (2) de l'appareil de couverture (1) comprend une section en jupe (24) qui dépend des bordures de la surface plane de la section de couverture (2) vers le fond du récipient à liquide (15), ladite section en jupe (24) pouvant être placée dans le récipient à liquide (15) d'une manière telle que la section en jupe (24) vient se placer à l'intérieur des bordures du récipient à liquide (15).

9. Appareil selon l'une quelconque des revendications 1 à 8, **caractérisé en ce que** l'appareil de couverture (1) comprend un tronçon de crémaillère (3) sous la surface plane de la section de couverture (2) afin de fixer sur l'appareil de couverture (1) des dispositifs qu'il s'agit d'associer à l'appareil de couverture (1).

10. Appareil selon l'une quelconque des revendications 1 à 9, **caractérisé en ce que** l'appareil de couverture (1) comprend, au-dessous de la surface plane de la section de couverture (2), un tube (13), une extrémité du tube (13) étant dirigée vers le réservoir à liquide (11) pour fournir du liquide depuis le récipient à liquide (15) vers le réservoir à liquide (11) de la section de couverture (2) via le tube (13) au moyen d'une pompe à liquide (16).

11. Appareil selon l'une quelconque des revendications 1 à 10, **caractérisé en ce que** le média de croissance (5) est réalisé en matériau poreux.

12. Appareil selon l'une quelconque des revendications 1 à 11, **caractérisé en ce que** l'appareil comprend des tubes à racines (4) qui peuvent être fixés sur la section de couverture (2) de l'appareil de couverture (1), en alignement avec les ouvertures de croissance (7) et au-dessous de la surface plane de la section de couverture (2), tels que le média de croissance (5) peut être positionné à l'intérieur de ces tubes à racines.

13. Appareil selon la revendication 12, **caractérisé en ce qu'**il y a des ouvertures (20) dans la partie inférieure des tubes à racines (4) pour faire circuler le liquide à travers les tubes à racines (4) et/ou des ouvertures (21) pour diriger un flux d'air à travers les tubes à racines (4).

14. Appareil selon l'une quelconque des revendications 1 à 13, **caractérisé en ce que** l'appareil comprend des éléments-raccords (25) qui peuvent être fixés sur la section de couverture (2) de l'appareil de couverture (1), en alignement avec les ouvertures de croissance (7) et au-dessous de la surface plane de la section de couverture (2), pour fixer des tubes à racines (4) de diverses tailles sur la section de couverture (2).

15. Appareil selon l'une quelconque des revendications 1 à 14, **caractérisé en ce que**, quand l'appareil de couverture (1) est positionné à sa place par rapport au récipient à liquide (15), un espace d'air (22) peut être ménagé entre le média de croissance (5) et la surface du liquide (17) dans le récipient à liquide (15), pour la croissance des racines hors du média de croissance (5) vers l'air.
